# EUROPÄISCHE PATENTSCHRIFT

(11) **EP 0 813 677 B1**
(45) Veröffentlichungstag und Bekanntmachung des Hinweises auf die Patenterteilung: **30.05.2001**
(21) Anmeldenummer: 96901695.5
(22) Anmeldetag: 02.02.1996
(51) Int. Cl.: G01G 11/00

(54) **VORRICHTUNG ZUR ERZEUGUNG EINES KONTINUIERLICHEN SCHÜTTGUTSTROMES SOWIE DIE ERMITTLUNG DESSEN FÖRDERSTÄRKE BZW. DOSIERMENGE**
DEVICE FOR GENERATING A CONTINUOUS STREAM OF BULK MATERIAL AND DETERMINING THE DELIVERY RATE OR BATCHING QUANTITY THEREOF
DISPOSITIF PERMETTANT DE PRODUIRE UN COURANT CONTINU DE MATERIAU EN VRAC, ET DETERMINATION DU DEBIT DE DECHARGE OU DE LA QUANTITE DE DOSAGE DE CE MATERIAU

(30) Priorität: 15.02.1995 DE 19504992
(43) Veröffentlichungstag der Anmeldung: 29.12.1997
(73) Patentinhaber: Labschies, Hartmut, 64665 Alsbach-Hähnlein (DE)
(72) Erfinder: Labschies, Hartmut, 64665 Alsbach-Hähnlein (DE)
(74) Vertreter: Neumann, Ernst Dieter, Dipl.-Ing.
(86) Internationale Anmeldenummer: DE9600163
(87) Internationale Veröffentlichungsnummer: WO9625648

(56) Entgegenhaltungen:
- EP-A- 0 292 723
- EP-A- 0 615 113
- CH-A- 362 542
- US-A- 3 805 904

## Beschreibung

Die Erfindung findet Anwendung in der Wäge-Dosiertechnik und betrifft eine Vorrichtung zur Ermittlung der Förderstärke und/oder der Dosiermenge eines kontinuierlich erzeugten Schüttgutstromes.

Aus DE-OS 3634994 ist eine Zentrifuge bekannt, bei der die von der Suspension abgetrennte Flüssigkeit am rotierenden Trommelumfang entnommen und die darin enthaltene kinetische Energie durch externe Vorrichtungen zurückgewonnen wird. Eine derartige Vorrichtung ist für Schüttgüter jedoch nicht verwendbar.

Bei einer bekannten Vorrichtung zum Abmessen von Schüttgut (CH-PS 362 542) wird das Schüttgut von einem Zulauftrichter auf einen mit senkrechter Achse rotierenden Drehteller gegeben und auf diesem von der Zuführstelle zu einer Abführstelle geführt, wo es durch einen Abstreifer vom Drehteller abgestreift wird.Der Drehteller ist auf einer Wiegevorrichtung angeordnet, mit der das Gewicht des auf dem Drehteller befindlichen Schüttgutes ermittelt werden kann. Eine solche Vorrichtung hat nur eine begrenzte Meßgenauigkeit und eine zu große Baugröße in Relation zur durchsetzbaren Förderstärke.
Im Hinblick auf eine zu erzielende kleine Baugröße liegt der Erfindung die Aufgabe zugrunde,einen kleinen Schüttgutstrom mit hoher Geschwindigkeit zu erzeugen (ähnlich einem Wasserstrahl aus einer Düse), der dann schließlich auf eine geeignete Meßeinrichtung gerichtet werden kann. Die Meßeinrichtung lenkt den Schüttgutstrahl um und ermittelt aus der dabei entstehenden Fliehkraft die Förderstärke, die zum Dosieren von Schüttgut herangezogen wird. Diese Aufgabe wird durch die Merkmale des Patentanspruchs 1 gelöst. Vorteilhafte Ausgestaltungen ergeben sich aus den Unteransprüchen.
Geeignete Meßeinrichtungen sind die in der Schüttguttechnik hinreichend bekannten Durchlaufmeßgeräte mit gekrümmten Schurren oder Prallplatten, die den Schüttgutfluß umlenken (wie aus der DE 2947414 bekannt).
Eine weitere Meßeinrichtung ist aus der DE 3717615 bekannt. Hier kann durch sinnvolle Anordnung des darin genannten Meßrades an die vorliegende Erfindung der Schüttgutstrom direkt in das Meßrad eingekoppelt werden.

Die Vorrichtung zur Herstellung eines Schüttgutstrahles sieht vor, daß Schüttgut durch ein Rohr axial in einen rotierenden Topf eingebracht wird. Das Schüttgut bewegt sich infolge Beschleunigung und Fliehkraft zur Randzone des Topfes hin und füllt schließlich den ganzen Topf auf bis hin zum axialen Eingang.
Ein an einem nicht umlaufenden Teil des Topfes angeordnetes Messer taucht in der Randzone des Topfes gegenläufig in den rotierenden Materialkuchen ein und koppelt dabei den Schüttgutstrahl aus.

### Erreichte Vorteile und Merkmale:

- Die erfindungsgemäße Vorrichtung ist gekapselt ausgeführt.
- Schüttgüter von Stäuben bis hin zu kleinen Granulaten können somit umweltfreundlich und hinreichend genau gemessen bzw. dosiert werden.
- Die Vorrichtung benötigt keine flexiblen Verbindungen, die wie bei den bekannten Dosiersystemen in der Schüttgutmeßtechnik Entlüftungs-und Druckkompensationsprobleme auslösen.
- Die Vorrichtung weist eine sehr geringe Bauhöhe aus.
- Sie ist geeignet zum direkten Anflanschen an bauseitige Siloausläufe, kann aber auch gegen den Boden abgestützt werden.
- Der Schüttgutstrahl ist frei von Pulsationen und zeichnet sich durch einen hochkonstanten Produktstrom aus.
- Die Vorrichtung ist eine direkte schnelle Meß-und Regeleinrichtung und arbeitet quasi totzeitlos infolge der hohen Schüttgutgeschwindigkeit (z.B. 10m/sek).
- Die Meßeinrichtung hat kleine Dimensionen im Verhältnis zur durchsetzbaren Förderstärke.

### Beschreibung Ausführungsbeispiel:

Es zeigen:
- Fig.1: Vertikalschnitt durch die Ausführungsform der Erfindung mit Schüttgutzuführung aus einem Silo.
- Fig.2: Axialschnitt der Ausführungsform nach Fig.1

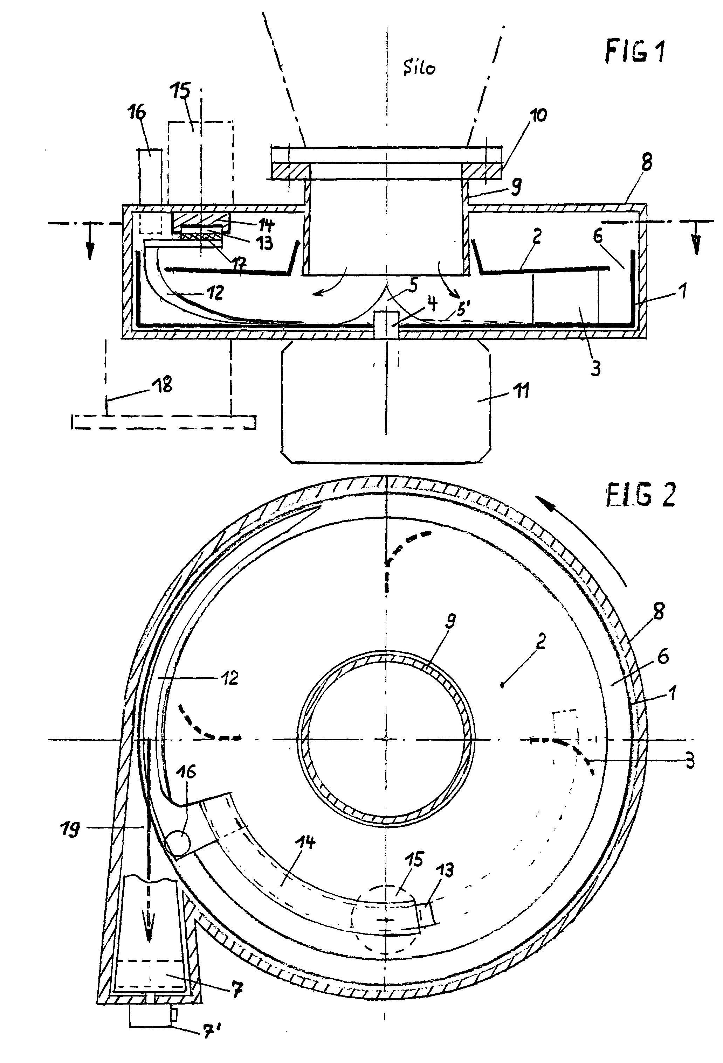

Die in Fig.1 dargestellte Vorrichtung setzt sich zusammen aus rotierenden und festen Teilen.
Zu den rotierenden Teilen gehört der Topf 1, der fliegend auf der Welle 4 eines Antriebmotors 11 vertikal gelagert ist. Mit dem Topf 1 rotiert ein Deckel 2, der gemäß Zeichnung ausgeprägt und etwas versenkt angeordnet ist und der das Schüttgut auf seinem Weg vom Zentrum zur Randzone des Topfes nach oben hin begrenzt und verhindert, daß sich das Schüttgut unkontrolliert in dem Topf ausbreiten kann.
Der Deckel ist zur Randzone des Topfes hin steigend angeordnet. Dadurch wird ein besseres Fließverhalten erreicht, auch dann, wenn sich das Schüttgut infolge der Zentrifugalkräfte verfestigt hat. Unterstützend wirkt, wenn die fallende Flanke des Zentralkegels 5 bis hin zur Randzone des Topfes 1 verlängert wird, was in der Zeichnung gestrichelt 5' dargestellt ist.
Der Zentralkegel 5 lenkt das vertikal einströmende Schüttgut aus der toten Mittelpunktzone in eine horizontale Richtung ab. Der Zentralkegel 5 ist mit einer Bohrung versehen zur Aufnahme der Antriebswelle 4.
Der Zentralkegel erhält bei Bedarf einen aufgesetzten Mixer als Schüttguteintragshilfe (nicht dargestellt).

Der Deckel 2 ist über feste Verbindungsstege 3 mit dem Boden des Topfes 1 verbunden. Der Deckel 2 gibt zum Innenrand des Topfes einen Spalt 6 frei.

Zu den feststehenden Teilen gehört das umschließende Gehäuse 8 mit dem vertikal angeflanschten Antriebsmotor 11 sowie dem Einlaufstutzen 9 mit aufgesetztem Flansch 10. Der Einlaufstutzen 9 ist fest mit dem Gehäuse 8 verbunden und hat eine negativ konische Ausprägung, d.h., der Einlaufquerschnitt ist kleiner als der Auslaufquerschnitt.

In den Spalt 6 taucht schräg nach unten das Messer 12, das mit seinem oberen Ende fest mit einer Gleitschiene 13 verbunden ist. In Fig.1 ist das Messer 12 maximal eingetaucht dargestellt. Die Gleitschiene 13 wird im Gleitlager 14 geführt. Das Gleitlager 14 ist an der Unterdecke des Gehäuses 8 befestigt. Gleitschiene und Gleitlager 13/14 sind so gekrümmt konstruiert und schräg geneigt angeordnet, daß bei Verstellung der Gleitschiene 13 das angeschlossene Messer 12 die geforderte Bewegung entlang der Zylindrischen Wand des Topfes 1 ausführen kann (siehe Fig.2).
Auf der Gehäuseoberfläche ist ein Verstellmotor 15 angeschraubt, der mit seiner Antriebswelle in die Gleitschiene 13 ragt und diese mit Rechts-Linkslauf entsprechend verstellt.
Auf der Gehäuseoberfläche ist weiterhin ein Schwingungserreger 16 aufgeschraubt, der mit seiner Erregung das sich darunter bewegende Messer 12 erreicht und dieses in Schwingung versetzt. Zu diesem Zweck ist das Messer 12 über ein Schwingmetall 17 mit der Gleitschiene 13 verbunden.Durch die Erregung des Messers 12 wird eine Unterstützung der Schüttgutauskopplung erreicht. Das Messer 12 hat eine den Strömungs-und Reibungsverhältnissen des Schüttgutes entsprechend angepaßte Form.
Das ausgekoppelte Schüttgut trifft auf die Umlenkschurre 7 , die sich auf eine Wägezelle 7' horizontal abstützt. Die Wägezelle 7' ist außen am Gehäuse 8 befestigt. Die Umlenkschurre kann mittels Blattfedern an die Gehäusedecke angehängt sein oder direkt auf die Wägezelle montiert werden.

An der kreisförmigen Gehäusewand ist eine Aufbruchstelle 19 vorgesehen, so daß an der Gehäuseinnenwand mitgeführtes Fehler-Schüttgutmaterial die Aufbruchstelle 19 passiert und sich über einen gemeinsamen Auslaufstutzen 18 automatisch entsorgt.

## Patentansprüche

1. Vorrichtung zur Ermittlung der Förderstärke und/oder der Dosiermenge eines kontinuierlich erzeugten Schüttgutstromes, wobei das Schüttgut über einen senkrecht angeordneten Rohrstutzen (9) mit Anschlußflansch (10) in einen rotierenden Topf (1) zentral einfließt, durch Zentrifugalbeschleunigung den Topf (1) auffüllt und ein Messer (12) als Austragsvorrichtung am Innenumfang das rotierende Schüttgut mit hoher Geschwindigkeit aus dem Topf (1) tangential auskoppelt und der erzeugte Schüttgutstrahl in Flugrichtung auf eine Meßeinrichtung einwirkt.

2. Vorrichtung nach Anspruch 1, wobei die Meßeinrichtung aus einer Meßschurre (7) besteht, die auf eine Wägezelle (7') einwirkt.

3. Vorrichtung nach Anspruch 1 oder 2, wobei der Rohrstutzen (9) am Einlauf einen kleineren Querschnitt hat als am Auslauf.

4. Vorrichtung nach Anspruch 1 oder 2, wobei ein Deckel (2) in den Topf (1) versenkt angeordnet ist, der zum Innenrand des Topfes einen Spalt (6) freigibt.

5. Vorrichtung nach Anspruch 4, wobei die lichte Höhe zwischen Deckel (2) und Topfboden (1) in Zentrumsnähe kleiner ist als am Spalt (6).

6. Vorrichtung nach Anspruch 1, wobei die Austragsvorrichtung ein verstellbares Messer (12) ist, das in den Spalt (6) eintaucht und sich entlang der zylindrischen Innenwand des Topfes (1) in Richtung Topfboden derart bewegt, daß die ausgeführte Bahnbewegung einem Teilsegment einer Ellipse folgt, die durch eine gedachte schräge Schnittfläche durch den zylindrischen Teil des Topfes (1) entstehen würde.

7. Vorrichtung nach Anspruch 6, wobei das Messer (12) mit einer Gleitschiene (13) mit Lager (14) fest verbunden ist, und die mit Antrieb (15) angetriebene Gleitschiene (13) in ihrer Form und Anordnung die elliptische Bahnbewegung für das Messer (12) vorgibt.

8. Vorrichtung nach Anspruch 6, wobei das Messer (12) durch einen außerhalb eines zylindrischen Gehäuses (8) montierten Schwingungserreger (16) in Schwingung versetzt wird.

9. Vorrichtung nach einem der Ansprüche 1-8, wobei das Gehäuse (8) die gesamte Inneneinrichtung eng umschließt und der obere Innenradius etwas kleiner ist als der untere am Boden.

10. Vorrichtung nach einem der Ansprüche 1-9, wobei an der kreisförmigen Gehäusewand eine Aufbruchstelle (19) vorgesehen ist, so daß an der Gehäuseinnenwand mitgeführtes Fehler-Schüttgutmaterial die Aufbruchstelle (19) passiert und sich über einen gemeinsamen Auslaufstutzen (18) automatisch entsorgt.

## Claims

1. A device for determining the conveying capacity and/or the dosage quantity of a continuously produced flow of bulk material, wherein the bulk material flows centrally via a vertically arranged pipe sleeve (9) with a connecting flange (10) into a rotating container (1) and fills the container (1) as a result of centrifugal acceleration and wherein a blade (12) having the function of a separation device tangentially uncouples the rotating bulk material at a high speed out of the container (1) and wherein the produced jet of bulk material acts in the direction of flying on a measuring device.

2. A device according to claim 1, wherein the measuring device consists of a measuring chute (7) which acts on a weighing cell (7').

3. A device according to claim 1 or 2, wherein the pipe sleeve (9) has a smaller cross-section at its inlet end than at its outlet end.

4. A device according to claim 1 or 2, wherein a cover (2) is sunk into the container (1) and leaves a gap (6) towards the inner edge of the container.

5. A device- according to claim 4, wherein the internal height between the cover (2) and the container base (1) is smaller near the centre than at the gap (6).

6. A device according to claim 1, wherein the separation device is provided in the form of an adjustable blade (12) which protudes into the gap (6) and moves along the cylindrical inner wall of the container (1) towards the container base in such a way that the course of the track movement follows a partial segment of an ellipse which would be produced by an imaginary inclined sectional face extending through the cylindrical part of the container (1).

7. Device according to claim 6, wherein the blade (12) is firmly connected to a sliding rail (13) having a bearing (14) and wherein the sliding rail (13) driven by a drive device (15) predetermines the elliptical track movement for the blade (12) in respect of shape and arrangement.

8. A device according to claim 6, wherein the blade (12) is made to oscillate by an oscillation generating device (16) mounted outside a cylindrical housing (8).

9. A device according to any one of claims 1 - 8, wherein the housing (8) tightly encloses the entire internal equipment and wherein the upper inner radius is slightly smaller than the lower inner radius at the base.

10. A device according to any one of claims 1 - 9, wherein a break-up region (19) is provided at the circular housing wall, so that any fault bulk material moved along the inner housing wall passes the break-up region (19) and is automatically discharged through a joint discharge sleeve (18).

## Revendications

1. Dispositif pour déterminer l'intensité d'avancement et/ou la quantité de dosage d'un flux de matériau en vrac produit continûment, dans lequel le matériau en vrac pénètre d'une manière centrale dans une coupelle rotative (1), par l'intermédiaire d'un embout tubulaire vertical (9) comportant une bride de raccordement (10), et remplit la coupelle (1) sous l'effet d'une accélération centrifuge, et un couteau (12) en tant que dispositif de sortie, évacue à grande vitesse, sur la périphérie intérieure, le matériau en vrac tournant, et dirige le jet produit du matériau en vrac dans la direction de vol vers un dispositif de mesure.

2. Dispositif selon la revendication 1, dans lequel le dispositif de mesure est constitué par une glissière de mesure (7), qui agit sur une cellule de pesée (7').

3. Dispositif selon la revendication 1 ou 2, dans lequel l'embout tubulaire (9) possède une section transversale plus petite au niveau de son entrée qu'au niveau de sa sortie.

4. Dispositif selon la revendication 1 ou 2, dans lequel un couvercle (2) est disposé en renfoncement dans le pot (1), en définissant une fente (6) par rapport au bord intérieur du pot.

5. Dispositif selon la revendication 4, dans lequel la libre hauteur entre le couvercle (2) et le fond (1) de la coupelle est plus faible à proximité du centre qu'au niveau de la fente.

6. Dispositif selon la revendication 1, dans lequel le dispositif de sortie est un couteau réglable (12), qui pénètre dans la fente (6) et se déplace le long de la paroi intérieure cylindrique du pot (1) en direction du fond de la coupelle de sorte que le déplacement réalisé sur la trajectoire suit un segment partiel d'une ellipse, qui serait obtenu au moyen d'une surface de coupe oblique imaginaire à travers la partie cylindrique de la coupelle (1).

7. Dispositif selon la revendication 6, dans lequel le couteau (12) est relié de façon fixe à une glissière (13) équipée d'un palier (14), et la glissière (13), qui est entraînée par le dispositif d'entraînement (15), prédéfinit, du point de vue de la forme et de la disposition, le déplacement sur une trajectoire elliptique pour le couteau (12).

8. Dispositif selon la revendication 6, dans lequel le couteau (12) est mis en vibrations par un dispositif de mise en vibrations (16) qui est monté à l'extérieur d'un boîtier cylindrique (8).

9. Dispositif selon l'une des revendications 1-8, dans lequel le boîtier (8) enveloppe étroitement l'ensemble du dispositif intérieur, et le rayon intérieur supérieur est légèrement inférieur au rayon inférieur inférieur au niveau du fond.

10. Dispositif selon l'une des revendications 1-9, dans lequel une zone d'ouverture (19) est prévue sur la paroi de forme circulaire du boîtier de sorte qu'un matériau en vrac défectueux entraîné conjointement le long de la paroi intérieure du boîtier franchit la zone d'ouverture (19) et est évacué automatiquement par l'intermédiaire d'une tubulure commune d'évacuation (18).
